# EUROPÄISCHE PATENTSCHRIFT

(11) **EP 3 043 930 B1**
(45) Veröffentlichungstag und Bekanntmachung des Hinweises auf die Patenterteilung: **22.08.2018**
(21) Anmeldenummer: 13798586.7
(22) Anmeldetag: 09.09.2013
(51) Int. Cl.: B09C 1/08, B09C 1/10, B09C 1/02, E02D 3/12, E21B 37/00, E21B 43/00

(54) **VERWENDUNG EINES DÜSENSTRAHLVERFAHRENS ZUR DEKONTAMINIERUNG VON VERSEUCHTEM ERDREICH ODER DEM INHALT VON VORRATS- ODER LAGERTANKS**
THE USE OF A JETTING PROCESS FOR DECONTAMINATING CONTAMINATED SOIL OR THE CONTENTS OF SUPPLY OR STORAGE TANKS
PROCÉDÉ À JET DE BUSE UTILISÉ POUR LA DÉCONTAMINATION D'UN SOL CONTAMINÉ OU DU CONTENU DE RÉSERVOIRS DE STOCKAGE OU DE BACS DE STOCKAGE

(43) Veröffentlichungstag der Anmeldung: 20.07.2016
(73) Patentinhaber: Heuser, Reinhard, 76351 Linkenheim-Hochstetten (DE)
(72) Erfinder: Heuser, Reinhard, 76351 Linkenheim-Hochstetten (DE)
(74) Vertreter: DREISS Patentanwälte PartG mbB
(86) Internationale Anmeldenummer: PCT/EP2013/068598
(87) Internationale Veröffentlichungsnummer: WO 2015/032444

(56) Entgegenhaltungen:
- WO-A1-01/68282
- DE-C1- 3 811 714
- JP-A- S60 129 322
- US-A- 5 624 209
- SPEI B: "REINIGUNG MINERALOELKONTAMINIERTEN ERDREICHS MIT TENSIDEN", WASSER, LUFT UND BODEN, VEREINIGTE FACHVERLAG, MAINZ, DE, Bd. 35, Nr. 7 / 08, 1. Juli 1991 (1991-07-01), Seiten 77-78,80, XP000226469, ISSN: 0938-8303

## Beschreibung

Die vorliegende Erfindung betrifft eine Verwendung eines Düsenstrahlverfahrens zur Dekontaminierung von verseuchtem Erdreich oder dem Inhalt von Vorrats- oder Lagertanks.

Bei der Abwicklung technischer Prozesse, die beispielsweise in Verbindung mit erdölhaltigen Produkten stehen, passiert es immer wieder, dass dabei ungewollt Erdöl ins Erdreich gelangt und den Boden kontaminiert. Andere, insbesondere chemische Produkte, aber auch beispielsweise Benzin können ähnlich schädlich wirken. Sind keine Vorkehrungen zum Schutz getroffen, können diese Stoffe im Erdreich versickern. Gravierende Ausmaße können Ölunfälle haben, bei denen in ungeschützten Gebieten mehr oder weniger Öl ins Erdreich fließt. Dabei besteht die Gefahr einer Grundwasserverseuchung, der schnell und wirkungsvoll entgegengewirkt werden muss.

Öle sind eine Sammelbezeichnung für mehr oder weniger viskose, meist organisch chemische Flüssigkeiten. Nach der chemischen Zusammensetzung werden fette, ätherische Mineral- und Silikonöle unterschieden. Zu den fetten Ölen zählen flüssige, halbfeste und feste Waren pflanzlicher und tierischer Herkunft. Der Transport und die Lagerung von Ölen erfolgt in Tankcontainern. Die pflanzlichen und tierischen Öle und Fette sind aufgrund ihrer Eigenschaften verschiedenen Veränderungen unterworfen, die beim Transport und der Lagerung berücksichtigt werden müssen. Lagern die Öle zu lange, können sie eindicken und eine feste Konsistenz einnehmen. Das Entfernen derartiger Öle und Fette ist dann sehr kosten- und zeitaufwändig.

Aus dem Stand der Technik sind Verfahren zur Dekontaminierung von ölverseuchtem Erdreich bekannt. Die unterschiedlichen Verfahren werden in der Regel in Abhängigkeit des Schweregrads der Bodenkontamination ausgewählt. So kommen bei kleineren Ölunfällen und Verschmutzungen Bindemittel zum Einsatz, die anschließend jedoch aufwändig entsorgt werden müssen.

Bei größeren Verschmutzungen wird das verseuchte Erdreich abgegraben und ebenfalls aufwändig entsorgt. Eine weitere Möglichkeit besteht auch darin, dass der Boden verbrannt wird, was eine sehr kostenträchtige Lösung darstellt. Großflächige Belastungen sind bekanntermaßen sehr zeitaufwändig und nur mit hohen Kosten beherrschbar.

Eine weitere Möglichkeit bietet der Einsatz von biologischen Verfahren mit Mikroorganismen. Hier werden ölabbauende Mikroorganismen mit einer Trägerflüssigkeit in das Erdreich eingebracht, z.B. durch Versickerung, über Brunnen, aber auch mit Injektionslanzen, so dass sich die Mikroorganismen so gut als möglich verteilen können. Die Grundwasserfließrichtung muss in diesem Zusammenhang beachtet werden, da die Mikroorganismen in Fließrichtung zum kontaminierten Bereich einzubringen sind. Eine homogene Verteilung der Mikroorganismen und damit verbunden ein rückstandloser Abbau der Ölverschmutzung ist jedoch nicht gewährleistet.

Aus der WO 01/68282 A1 und der US 5 624 209 A sind Verfahren zur Dekontaminierung von verseuchtem Erdreich mit Merkmalen des Oberbegriffs des Patentanspruchs 1 bekannt.

Der Erfindung liegt die Aufgabe zugrunde, ein zuverlässiges Verfahren zur Dekontaminierung von verseuchtem Erdreich zu schaffen, das großflächig wirkt und nahezu unabhängig von einer Bodenbeschaffenheit anwendbar ist. Dieses Verfahren soll auch geeignet sein, um feste Öle aus Lagertanks entfernen zu können.

Die Aufgabe wird erfindungsgemäß gelöst durch ein Verfahren mit Merkmalen des Patentanspruchs 1. Folglich wird (Duplex-Verfahren) der Injektionsstrahl mit Druckluft ummantelt. Dies geschieht beispielsweise durch eine Ringdüse am freien Ende der Injektionslanze, die mittig das flüssige dekontaminierende Mittel und im äußeren Bereich die Druckluft ausstößt. Die Druckluft dient dazu, den Wirkbereich zur Dekontaminierung zu vergrößern, indem die Druckluft das Erdreich zusätzlich erodiert.

Das Düsenstrahlverfahren ist in unterschiedlichen Varianten aus dem Tiefbau bekannt und wird dort z.B. zum Erstellen eines Zement/Bodengemisch-Körpers angewandt, um eine bessere Tragfähigkeit eines Baugrundes herzustellen. Hierbei wird eine Injektionslanze in das Erdreich gebohrt und anschließend das Erdreich unter Hochdruck mit einer zementhaltigen Bindemittelsuspension vermischt.

Dies könnte auch mit einem Einpressverfahren realisiert werden, jedoch arbeitet das Einpressverfahren mit niedrigen Drücken. So beeinflusst die Kornstruktur, die Kornzusammensetzung, die Lagerungsdichte und die Wasserdurchlässigkeit des Erdreichs stark die Verteilung des Einpressgutes, was für die vorliegende Erfindung unvorteilhaft ist.

Der Erfindung liegt die Idee zu Grunde, zur Dekontaminierung des verseuchten Erdreichs das bekannte Verfahren des Düsenstrahlverfahrens zu nutzen, um - im Gegensatz zur bekannten Anwendung - anstatt der zementhaltigen Bindemittelsuspension das flüssige dekontaminierende Mittel in das Erdreich einzubringen. Das Düsenstrahlverfahren arbeitet gegenüber dem Einpressverfahren mit einem wesentlich höheren Druck, wobei damit der Wirkbereich im Erdreich zur Dekontaminierung vorteilhafterweise wesentlich vergrößert wird. Auch die Verteilung des flüssigen dekontaminierenden Mittels im Erdreich ist bei der Anwendung des Düsenstrahlverfahrens wesentlich homogener.

Das Düsenstrahlverfahren kann erfindungsgemäß aber auch dazu verwendet werden, um Altöle in Lager- und Transporttanks abzubauen. Auch hier wird in das fest gewordene und eingedickte Öl die Lanze eingebohrt und anschließend das dekontaminierende Mittel eingepresst. Die Tanks können ortsfest sein oder sich auf der See oder an einem Fahrzeug befinden. Soweit in der nachfolgenden Beschreibung auf das Erdreich Bezug genommen wird, so gelten die Verfahrensschritte gleichermaßen für den Abbau von verfestigten Ölen oder Fetten in Lagertanks.

Beim erfindungsgemäßen Verfahren wird das flüssige dekontaminierende Mittel mit einer Austrittsgeschwindigkeit von größer 50 m/sec, insbesondere von größer 100 m/sec in das Erdreich eingebracht. Dabei erreicht der Austrittsdruck des flüssigen dekontaminierenden Mittels mindestens 300 bar und vorteilhaft 570 bis 630 bar. Da beim erfindungsgemäßen Verfahren die Injektionslanze im Wesentlichen beliebig tief in das Erdreich gebohrt werden kann, kann die Tiefe des Wirkbereichs der Dekontaminierung im Erdreich genau festgelegt werden. Dabei kann vorteilhafterweise die Injektionslanze in einem beliebigen Winkel zwischen horizontal und vertikal in das Erdreich eingebracht werden. Mit einer einzigen Bohrung kann somit bereits ein Bereich von bis zu 3 Meter im Durchmesser mit dem flüssigen dekontaminierenden Mittel behandelt werden. Durch Aneinanderreihen solcher säulenförmigen Injektionsbereiche ist eine breite, raumgreifende Verteilung des flüssigen dekontaminierenden Mittels im Erdreich, auch bis in große Tiefen, möglich.

Dabei lässt sich das erfindungsgemäße Verfahren auch in sehr feinkörnigen Böden, wie Schluffen, die bis an eine Tongrenze heranreichen, einsetzen. Ein weiterer Vorteil ist der, dass beim erfindungsgemäßen Verfahren die Bodenstruktur beziehungsweise das Bodengefüge mit den Hochdruckdüsenstrahlen aufgelöst wird. Im Wirkbereich der Düsen vermischt sich das flüssige dekontaminierende Mittel nahezu homogen mit dem Erdreich. Verunreinigungen werden durch den hohen Druck des flüssigen dekontaminierenden Mittels unabhängig von der Beschaffenheit, Zusammensetzung und Konsistenz des Erdreichs erreicht. Die flüssigen dekontaminierenden Mittel haben so die Möglichkeit einen Zersetzungsprozess und einen rückstandslosen Abbau der Verseuchung zu gewährleisten.

In einer bevorzugten Ausführungsform des Verfahrens wird als flüssiges dekontaminierendes Mittel ein Tensid verwendet und dient bevorzugt der Dekontamination von ölverseuchtem Erdreich. Tenside haben die Eigenschaft, eine sehr geringe Oberflächenspannung zu erzeugen. Das Tensid wirkt dabei z.B. in einer Mischung aus öl- oder fetthaltigen Stoffen mit Wasser als Emulgator und führt so zu einer sehr fein verteilten Öl/Wasser Emulsion. Tenside sind außerdem biologisch abbaubar. Das flüssige dekontaminierende Mittel des erfindungsgemäßen Verfahrens ist bevorzugt ein Gemisch aus verschiedenen Tensiden, die z.B. aus Hanföl und Hefe hergestellt sind. Hieraus resultiert eine besonders gute und schnelle biologische Abbaubarkeit dieser Tensidgemische, da Mikroorganismen beziehungsweise Bakterien, die für den Abbau sorgen, dieses natürliche Tensidgemisch schneller abbauen als ein chemisch hergestelltes Tensid.

Den Tensiden beziehungsweise den Tensidgemischen können auch von vorn herein schon Mikroorganismen beigemischt sein. So kann im Einzelfall z.B. auf einen bestimmten Ölunfall reagiert werden, wobei besonders geeignete Mikroorganismen für den speziellen Einsatz beispielsweise im Meer, in einem sandigen Gelände oder in einer sehr warmen beziehungsweise sehr kalten Umgebung ausgewählt werden können. Das Institut für Mikrobiologie der Universität Greifswald beispielsweise unterhält eine Mikroorganismen-Sammlung insbesondere für unterschiedliche ölabbauende Mikroorganismen, wobei für unterschiedliche Einsätze entsprechend leistungsfähige Mikroorganismen gewählt werden können.

Die vollständige Dekontamination des Erdreichs kann dabei innerhalb von etwa 30 Tagen geschehen und geschieht unbeeinflusst von äußeren Einflüssen automatisch durch den Zersetzungsprozess der Emulsion im Erdreich. Die Zeitdauer des Zersetzungsprozesses ist temperaturabhängig. Das Verfahren ist jedoch nicht auf die Dekontamination von ölverseuchtem Erdreich beschränkt, sondern deckt Dekontamination von Verseuchungen im Erdreich in einem Bereich von Schweröl bis zu leicht flüchtigen Kohlenwasserstoffen ab.

In einer einfachen Form des erfindungsgemäßen Verfahrens gemäß Anspruch 2 wird das flüssige dekontaminierende Mittel über eine Düse einer Injektionslanze injiziert, wobei die Injektionslanze in ein zuvor in das Erdreich gebohrtes Bohrloch eingeführt wird. Dies ist ein einfaches und damit kostengünstiges Verfahren, das keine hohen Ansprüche an die Bodenbeschaffenheit stellt.

In einer Weiterentwicklung des erfindungsgemäßen Verfahrens (Triplex-Verfahren) wird mit einem druckluftummantelten Wasserstrahl der Boden vorerodiert und anschließend das flüssige dekontaminierende Mittel injiziert. Dabei wird beim Injizieren die Vorrichtung bevorzugt mit einem geringeren Druck beaufschlagt. Der geringere Druck beeinflusst einerseits weniger die Mikroorganismen; bei hohen Drücken können die Mikroorganismen eventuell geschädigt werden, wobei die dekontaminierende Wirkung dann beeinträchtigt wird. Andererseits führt der geringere Druck in der Injektionslanze zu einer geringeren Abnutzung des Düsenkopfes.

Bei der Verwendung des erfindungsgemäßen Verfahrens wird bei Bedarf, nachdem mit dem Injektionsvorgang begonnen wurde, die Injektionslanze unter ständigem Drehen langsam gezogen. So wird der Wirkbereich auch in der Tiefe des Erdreichs entsprechend vergrößert, da das erfindungsgemäße Verfahren in unterschiedlichen Schichten, bzw. in einem großen Bereich des Erdreichs entlang des Bohrlochs, angewandt werden kann.

Dabei wird erfindungsgemäß in Abweichung zum bekannten Düsenstrahlverfahren das flüssige dekontaminierende Mittel bis zur Oberfläche des Erdreichs eingebracht, um insbesondere den Bereich, der sich unmittelbar unter der Erdoberfläche befindet, mit dem flüssigen dekontaminierenden Mittel zu behandeln. In der Regel ist dies der am stärksten kontaminierte Bereich des Erdreichs.

Unabhängig von der Wahl des expliziten Verfahrens (Duplex- oder Triplex-Verfahren) ist das angewandte Verfahren in jedem Fall kostengünstiger als der bekannte konventionelle Bodenabbau mit anschließender Entsorgung. Dazu ist eine homogene Verteilung des flüssigen dekontaminierenden Mittels und ein damit verbundener rückstandloser Abbau der Verseuchung gewährleistet.

Weitere Merkmale und Vorteile der vorliegenden Erfindung werden nachfolgend anhand der Figuren näher erläutert.

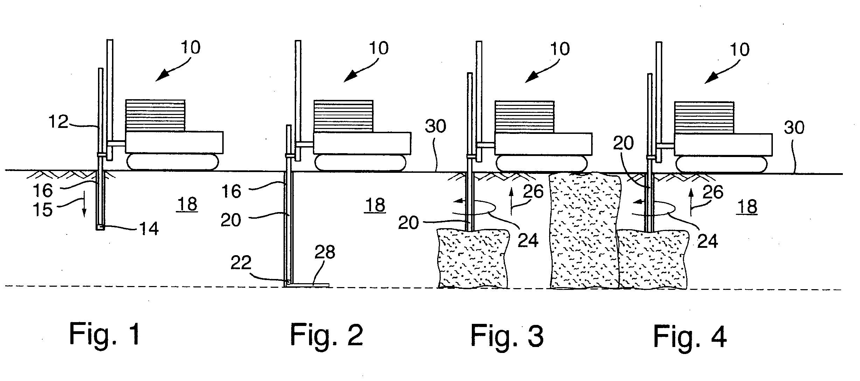

Die Figuren 1 bis 4 zeigen in vier Verfahrensschritten den Ablauf des erfindungsgemäßen Verfahrens.

Das erfindungsgemäße Verfahren stellt ein zuverlässiges Verfahren zur Dekontaminierung von verseuchtem Erdreich dar, das großflächig wirkt und nahezu unabhängig von der Bodenbeschaffenheit anwendbar ist.

Wie Figur 1 zeigt, wird mit einem Bohrgerät 10 zunächst eine Bohrgestänge 12 mit einer Bohrkrone 14 am freien Ende der Bohrstange 12 abgeteuft (siehe Pfeil 15) und dabei ein Bohrloch 16 im Erdreich 18 erzeugt. In der Regel unterstützt ein Spülstrom diesen Vorgang und hält das Bohrloch 16 um das Bohrgestänge 12 für den Abfluss einer Bohrspülung offen. Für Durchbohrungen von besonders festem Erdreich 18 sowie Steinen werden spezielle Bohrkronen 14 verwendet. Das in Figur 1 gezeigte Bohrloch 16 ist vertikal im Erdreich 18 eingebracht; es sind jedoch auch Bohrlöcher 16 in einem beliebigen Winkel zwischen vertikal und horizontal - je nach der Form des Geländes - möglich.

In einem zweiten Verfahrensschritt wird gemäß Figur 2 eine Injektionslanze 20 bis zur tiefsten Stelle in das Bohrloch 16 eingeführt. In einer bevorzugten Ausführungsform, dem sogenannten Triplex-Verfahren, weist die Injektionslanze 20 am freien Ende eine Ringdüse 22 auf. Die Ringdüse 22 umfasst mehrere Austrittsbereiche für unterschiedliche Medien. Aus der Ringsdüse 22 kann einerseits ein druckluftummantelter Wasserstrahl ausgestoßen werden, andererseits kann der Betrieb der Injektionslanze 20 umgeschaltet werden, so dass ein flüssiges dekontaminierendes Mittel ausgestoßen wird.

Im erfindungsgemäßen Verfahren wird zunächst der druckluftummantelte Wasserstrahl aktiviert, wobei dieser mit einem Druck von etwa 600 bar und mit einer Geschwindigkeit von über 100 m/sec aus der Ringdüse 22 austritt. Dabei wird das Erdreich 18 erodiert, das bedeutet, das Bodengefüge des Erdreichs 18 wird gelockert beziehungsweise aufgelöst.

Anschließend wird der Betrieb der Injektionslanze 20 auf den Austritt des flüssigen dekontaminierenden Mittels umgeschaltet, damit der eigentliche Injektionsstrahl zur Dekontaminierung aus der Ringdüse 22 austritt. Dabei ist ein geringerer Druck nötig, da das Erdreich 18 zur Aufnahme des flüssigen dekontaminierenden Mittels entsprechend vorbereitet ist.

Anschließend wird die Injektionslanze 20 schrittweise unter ständigem Drehen (siehe Pfeil 24) aus dem Bohrloch 16 herausgezogen (siehe Pfeil 26) und der oben beschriebene Vorgang, nämlich das Einbringen des druckluftummantelten Wasserstrahls und anschließend Einbringen des flüssigen dekontaminierenden Mittels, auf unterschiedlichen Ebenen im Bohrloch 16 wiederholt, so wie es die Figur 3 zeigt. Durch das Drehen der Injektionslanze 20 wird das flüssige dekontaminierende Mittel auf jeder Ebene in einem Winkel von 360° horizontal ins Erdreich 18 eingebracht.

Durch das erfindungsgemäße Verfahren entsteht ein säulenförmiger Bereich 28 im Erdreich 18, in dem das flüssige dekontaminierende Mittels homogen verteilt ist. Durch das erfindungsgemäße Verfahren kann der säulenförmige Bereich 28 einen Durchmesser von etwa 3 Meter aufweisen. Der mit dem flüssigen dekontaminierenden Mittel säulenförmige Bereich 28 wird so von unten bis unmittelbar an die Erdoberfläche 30 aufgebaut werden (siehe Figur 4).

Anschließend werden die in den Figuren 1 bis 3 gezeigten Verfahrenschritte an voneinander versetzt angeordneten Position an der Erdoberfläche 30 wiederholt, so dass ein großflächiger Bereich des Erdreichs 18 mit dem flüssigen dekontaminierenden Mittel behandelt ist (siehe Figur 4). Die einzelnen Bohrlöcher 16 werden bevorzugt in einem Abstand von etwa 2,5 bis 3 Meter an der Erdoberfläche 30 angeordnet.

Das erfindungsgemäße Verfahren dient bevorzugt zur Dekontaminierung von ölverseuchtem Erdreich 18, bei dem als flüssiges dekontaminierendes Mittel ein Tensidgemisch angewandt wird. Das Tensidgemisch emulgiert das Öl aus dem Erdreich 18 mit Wasser und bewirkt, dass mit Hilfe von Mikroorganismen beziehungsweise Bakterien die Emulsion besonders schnell biologisch abgebaut werden kann. Das bedeutet, dass die eigentliche Dekontaminierung nach dem Einbringen des Tensidgemisches in das Erdreich 18 automatisch ohne weitere Eingriffe abläuft. Das Tensidgemisch ist in Lage, innerhalb von etwa 30 Tagen das ölverseuchte Erdreich 18 zu dekontaminieren.

In einem alternativen Verfahren kann auf den separaten Arbeitsschritt des Einbringens des druckluftummantelten Wasserstrahls verzichtet werden und sofort der Injektionsstrahl mit Druckluft ummantelt werden.

In einem nochmals vereinfachten Verfahren, das nicht unter den Schutzbereich der Patentansprüche fällt, wird der Injektionsstrahl über eine einfache Düse direkt (ohne Druckluftummantelung) in das Erdreich 18 injiziert.

Bekannt ist auch ein Düsenstrahlverfahren, bei dem mit Hilfe eines Schneidstrahls, der auch luftummantelt sein kann, das Erdreich teilweise aufgeschnitten beziehungsweise ausgefräst wird. Der Schneidstrahl kann Wasser, Druckluft und/oder Injektionsflüssigkeit aufweisen.

## Patentansprüche

1. Verwendung eines Düsenstrahlverfahrens zur Dekontaminierung von verseuchtem Erdreich (18) oder dem Inhalt von Vorrattanks, wobei anschließend an das Bohren einer Injektionslanze in das Erdreich oder den Inhalt des Tanks ein flüssiges dekontaminierendes Mittel in das Erdreich (18) oder den Inhalt eingebracht wird, **dadurch gekennzeichnet, dass** das flüssige dekontaminierende Mittel über eine Düse (22) einer Injektionslanze (20) durch einen druckluftummantelten Injektionsstrahl in das Erdreich (18) oder den Inhalt eingebracht wird.

2. Verwendung eines Düsenstrahlverfahrens nach Anspruch 1 **dadurch gekennzeichnet, dass** das Erdreich (18) oder der Inhalt in einem ersten Arbeitsschritt mit einem druckluftummantelten Wasserstrahl erodiert und anschließend in einem zweiten Arbeitsschritt das flüssige dekontaminierende Mittel gemäß Anspruch 1 in das Erdreich (18) oder den Inhalt injiziert wird, wobei insbesondere beim Injizieren des flüssigen dekontaminierenden Mittels ein geringerer Druck verwendet wird, als beim Einbringen des druckluftummantelten Wasserstrahls.

3. Verwendung eines Düsenstrahlverfahrens nach Anspruch 1 oder 2, **dadurch gekennzeichnet, dass** das flüssige dekontaminierende Mittel ein Tensid umfasst.

4. Verwendung eines Düsenstrahlverfahrens nach Anspruch 1 oder 2 oder 3, **dadurch gekennzeichnet, dass** ein ölverseuchtes Erdreich (18) dekontaminiert wird.

5. Verwendung eines Düsenstrahlverfahrens nach einem der vorhergehenden Ansprüche, **dadurch gekennzeichnet, dass** beim Düsenstrahlverfahren das flüssige dekontaminierende Mittel mit einer Austrittsgeschwindigkeit von größer 50 m/sec, vorzugsweise von größer 100 m/sec in das Erdreich (18) oder den Inhalt eingebracht wird.

6. Verwendung eines Düsenstrahlverfahrens nach einem der vorhergehenden Ansprüche, **dadurch gekennzeichnet, dass** beim Düsenstrahlverfahren das flüssige dekontaminierende Mittel mit einem Druck von größer 400 bar, vorzugsweise von 600 (+/- 20) bar in das Erdreich (18) oder den Inhalt eingebracht wird.

7. Verwendung eines Düsenstrahlverfahrens nach einem der vorhergehenden Ansprüche, **dadurch gekennzeichnet, dass** das flüssige dekontaminierende Mittel in einem beliebigen Winkel zwischen horizontal und vertikal in das Erdreich (18) oder den Inhalt eingebracht wird.

8. Verwendung eines Düsenstrahlverfahrens nach einem der vorhergehenden Ansprüche, **dadurch gekennzeichnet, dass** das flüssige dekontaminierende Mittel bis zur Oberfläche des Erdreichs (18) oder des Inhalts eingebracht wird.

## Claims

1. Use of a nozzle jet process for decontaminating contaminated soil (18) or the contents of storage tanks, wherein after drilling an injection lance into the soil or the contents of the tank a liquid decontaminating agent is subsequently introduced into the soil (18) or the contents of the tank, **characterized in that** the liquid decontaminating agent is introduced into the soil (18) or the contents via a nozzle (22) of an injection lance (20) by an injection jet coated with compressed air.

2. Use of a nozzle jet process according to claim 1, **characterized in that** the soil (18) or the contents is eroded in a first working step with a water jet coated with compressed air and subsequently, in a second working step, the liquid decontaminating agent according to claim 1 is injected into the soil (18) or the contents, wherein in particular when injecting the liquid decontaminating agent a lower pressure is used than when introducing the compressed air-coated water jet.

3. Use of a nozzle jet process according to Claim 1 or 2, **characterized in that** the liquid decontaminating agent comprises a tenside.

4. Use of a nozzle jet process according to claim 1 or 2 or 3, **characterized in that** an oil-contaminated soil (18) is decontaminated.

5. Use of a nozzle jet process according to one of the preceding claims, **characterised in that** in nozzle jet process the liquid decontaminating agent is introduced into the soil (18) or the contents at an outlet speed of greater than 50 m/sec, preferably greater than 100 m/sec.

6. Use of a nozzle jet process according to one of the preceding claims, **characterised in that** in the nozzle jet process the liquid decontaminating agent is introduced into the soil (18) or the contents at a pressure of greater than 400 bar, preferably 600 (+/- 20) bar.

7. Use of a nozzle jet process according to one of the preceding claims, **characterised in that** the liquid decontaminating agent is introduced into the soil (18) or the contents at any angle between horizontally and vertically.

8. Use of a nozzle jet process according to one of the preceding claims, **characterised in that** the liquid decontaminating agent is introduced up to the surface of the soil (18) or the contents.

## Revendications

1. Utilisation d'un procédé à jet de buse pour décontaminer le sol contaminé (18) ou le contenu de réservoirs de stockage, dans lequel, après le forage d'une lance d'injection dans le sol ou le contenu du réservoir, un agent décontaminant liquide est ensuite introduit dans le sol (18) ou le contenu du réservoir, **caractérisé en ce que** l'agent décontaminant liquide est introduit dans le sol (18) ou le contenu via une buse (22) d'une lance d'injection (20) par un jet d'injection revêtu d'air comprimé.

2. Utilisation d'un procédé à jet de buse selon la revendication 1, **caractérisé en ce que** le sol (18) ou le contenu est érodé dans une première étape de travail avec un jet d'eau revêtu d'air comprimé et ensuite, dans une deuxième étape de travail, l'agent décontaminant liquide selon la revendication 1 est injecté dans le sol (18) ou le contenu, en particulier lors de l'injection de l'agent décontaminant liquide, une pression plus faible que lors de l'introduction du jet d'eau revêtu d'air comprimé.

3. Utilisation d'un procédé de jet de buse selon la revendication 1 ou 2, **caractérisé en ce que** l'agent de décontamination liquide comprend un tensioactif.

4. Utilisation d'un procédé à jet de buse selon la revendication 1 ou 2 ou 3, **caractérisé en ce qu'**un sol contaminé par de l'huile (18) est décontaminé.

5. Utilisation d'un procédé à jet de buse selon l'une des revendications précédentes, **caractérisé en ce que**, dans le procédé à jet de buse, l'agent décontaminant liquide est introduit dans le sol (18) ou le contenu à une vitesse de sortie supérieure à 50 m/sec, de préférence supérieure à 100 m/sec.

6. Utilisation d'un procédé à jet de buse selon l'une des revendications précédentes, **caractérisé en ce que**, dans le procédé à jet de buse, l'agent décontaminant liquide est introduit dans le sol (18) ou le contenu à une pression supérieure à 400 bar, de préférence 600 (+/- 20 bar).

7. Utilisation d'un procédé à jet de buse selon l'une des revendications précédentes, **caractérisé en ce que** l'agent décontaminant liquide est introduit dans le sol (18) ou le contenu à n'importe quel angle entre horizontalement et verticalement.

8. Utilisation d'un procédé à jet de buse selon l'une des revendications précédentes, **caractérisé en ce que** l'agent décontaminant liquide est introduit jusqu'à la surface du sol (18) ou de son contenu.
